# EUROPEAN PATENT SPECIFICATION

(11) **EP 2 137 803 B1**
(45) Date of publication and mention of the grant of the patent: **13.04.2011**
(21) Application number: 08753214.9
(22) Date of filing: 28.04.2008
(51) Int. Cl.: H02J 7/00, F41A 19/60, H02J 1/14

(54) **DEVICE AND METHODS FOR SUPPLYING INSTANT HIGH POWER TO SMALL ARMS FIRE CONTROL SYSTEM**
VORRICHTUNG UND VERFAHREN ZUR VERSORGUNG EINES SCHUSSSTEUERSYSTEMS FÜR HANDFEUERWAFFEN MIT SOFORTIGER HOCHLEISTUNG
DISPOSITIF ET PROCEDES POUR FOURNIR UNE ENERGIE IMPORTANTE INSTANTANEE A UN SYSTEME DE COMMANDE DE TIR D' ARME A FEU DE PETIT CALIBRE

(43) Date of publication of application: 30.12.2009
(73) Proprietor: Agency for Defence Development, Daejeon-si (KR)
(72) Inventor: KAWK, Ki-Ho, Yeseong-gu, Deajon 305-330 (KR); KO, Jung-Ho, Seo-gu, Daejeon 302-744 (KR); YOON, Joo-Hong, Yuseong-gu Daejeon 305-328 (KR); KIM, Do-Jong, Seo-gu, Daejon 302-280 (KR)
(74) Representative: Jackson, Richard Eric
(86) International application number: PCT/KR2008/002408
(87) International publication number: WO 2009/133973

(56) References cited:
- WO-A1-2006/081613
- JP-A- 2003 299 243
- US-A- 4 019 273
- US-A- 4 718 187
- US-A- 5 458 043
- US-A- 5 676 450
- US-B1- 6 354 033
- US-B2- 7 170 194

## Description

### Technical Field

The present invention relates to a power supply device of a small arms fire control system and a similar military/civilian power supply device, which are driven using a battery and an electric double layer capacitor (hereinafter, referred to as a "supercapacitor") and require instant high power.

### Background Art

In general, a small arms fire control system must be driven using only a battery for portability and a main control board and an infrared processing board of the system must be driven within a maximum continuous discharging current range of the battery. The fire control system must also be able to supply power to devices requiring an instant high power such as driving of a laser range finder module and energy charging of a fuse setter within a range of the greatest pulse discharging current.

In a state where an average current of 1.5A is continuously supplied from the battery to the system, if current of 1.5A must be supplied for a specific time (for example, 0.5 second) every 5-second cycle, the method to achieve this end is to use a battery having a sufficiently high capacity or a supercapacitor that can compensate for an instant high current.

Thus, the most appropriate method of stably supplying power to a small arms system, which is driven by a battery and portable, is to design a power supply device having a combination of the battery and the supercapacitor.

### Disclosure of Invention

### Technical Problem

However, this method also entails a problem in that the excessive current is needed from the battery upon the initial charging of the capacitor, thereby causing damage to the battery.

Therefore, the existing power supply devices using the battery and the capacitor employ a current limit circuit or a chip in order to prevent the excessive current required to charge the capacitor with electricity. The current limit circuit or chip always limits the current to a fixed current value irrespective of the state of power supply to a system. Accordingly, an efficient use of the system power is impossible and, thereby causing the charging time of the supercapacitor to be lengthened. Such a power supply device is described in US5676450A, which forms a starting point for the preamble of independent claims 1 and 5.

In particular, this problem is more important in such a small arms fire control system, wherein accurate power control is needed for driving of a laser range finder module and an infrared shutter and energy charging of a fuse setter for short time.

Particularly, in the case of a small arms fire control system that is driven using a single battery so as to minimize the size of an overall system, the required power must be stably supplied to loads requiring voltage, which is several times to several hundreds of times greater than the battery voltage. To this end, a boost converter to be able to boost the battery voltage and the supercapacitor to be available supply an instant high power are necessarily required.

Furthermore, in the case of a load that stably requires a voltage of several hundreds of volts for several milliseconds, such as the laser range finder module, a battery voltage must be primarily boosted using the boost converter and then supplied to the boost converter for driving the laser range finder module. At this time, if the supercapacitor is fully charged by the primarily boosted voltage, a high initial inrush current is generated, which may give great damage to the supercapacitor and other components. When considering that an average efficiency of the boost converter reaches 80 to 85 %, there also occurs a problem in that the charging efficiency is reduced.

### Technical Solution

Accordingly, the present invention has been made to solve the above problems occurring in the prior art, and it is an object of the present invention to provide a method of designing a power supply device, wherein in designing a small arms fire control system that is driven under limited power conditions, such as a battery, and a similar power supply device of a small arms system, a limit current value supplied to the supercapacitor can be varied depending on the power state of a system using a power control microprocessor, the influence of the inrush current occurring upon initial charging of the supercapacitor can be minimized, and the charging efficiency can be improved.

To achieve the above object, according to the present invention, there is provided a power supply device of a small arms fire control system having the features of independent claim 1 and a method of supplying power to a small arms fire control system having the features of independent claim 5.

The Zener diode functions to limit an initial inrush current.

When the first current limit part is supplied with power from the battery, it is turned on. If the supercapacitor is fully charged and the system is stabilized, the second current limit part is turned on.

When the high power is supplied to the load, the boost converter is turned on.

**Advantageous Effects**

Two current limit parts having different limit current values are used, the power states of other electronic boards within a system are checked in real-time, and a current limit part is switched based on the checked result. Thus, the limit current value can be changed and therefore power can be supplied to the system stably within a limited range of a continuous discharging current of a battery. Further, in charging the supercapacitor, the power control microprocessor monitors the charging voltage of the supercapacitor in real-time while firstly charging the capacitor through the Zener diode, and turns on the boost converter when the charging voltage of the supercapacitor reaches the same voltage level as that of the battery and then charges the capacitor up to the final voltage. Accordingly, the influence of an inrush current can be minimized and the charging efficiency of the supercapacitor can be increased, when compared with charging up to a final voltage through the boost converter from the start.

### Brief Description of Drawings

FIG. 1 shows a configuration of a general instant high power supply device;

FIG. 2 is a configuration of an instant high power supply device for a small arms fire control system according to the present invention;

FIG. 3 is a graph showing a relationship of a power control signal of a microprocessor and a charging time of a supercapacitor in the present invention;

FIG. 4a is a graph showing a charging voltage of the supercapacitor and an inrush current when the existing power supply device is applied;

FIG. 4b is a graph showing a charging voltage of the supercapacitor and an inrush current when the power supply device according to the present invention is applied; and

FIG. 5 is a view illustrating an instant high power supply method for the small arms fire control system according to the present invention.

### Best Mode for Carrying out the Invention

The present invention will now be described in detail in connection with a specific embodiment with reference to the accompanying drawings.

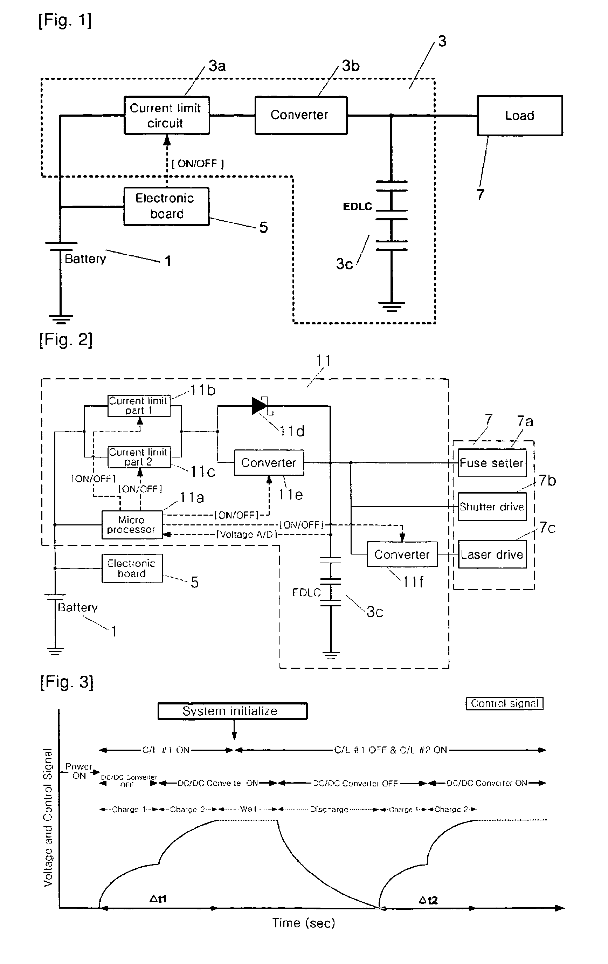

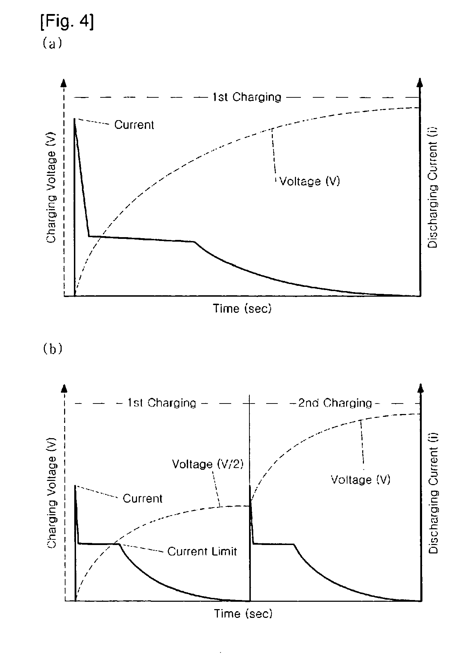

FIG. 1 shows a configuration of a general instant high power supply device. FIG. 2 is a configuration of an instant high power supply device for a small arms fire control system according to the present invention. FIG. 3 is a graph showing a relationship of a power control signal of a microprocessor and a charging time of a supercapacitor in the present invention. FIGS. 4a and 4b are graphs showing a charging voltage of the supercapacitor and an inrush current when the existing power supply device is applied and when the power supply device according to the present invention is applied, respectively.

FIG. 1 shows a configuration of a general power supply device for instant high power supply. Power supplied from a battery I is supplied to a power supply device 3 and electronic boards 5 within the device. A current value in which a maximum current value, which is always consumed by the electronic boards 5, is excluded from a maximum pulse discharging current of the battery 1, is set to a current limit value of a current limit circuit or a chip 3a. Therefore, a supercapacitor 3c is charged to the limited current value through a boost converter 3b. As described above, the charged supercapacitor 3c compensates for the battery 1 when a load 7 requests an instant high power and thus supplies the load 7 with an instant high current.

FIG. 2 shows a configuration of a power supply device for a small arms fire control system according to the present invention. A power supply device 11 includes a power control microprocessor 11a for grasping the power supply state of the system in real-time, checking a voltage of a supercapacitor 3c, and performing ON/OFF control of chips used in the power supply device, a first current limit part 11b having a low current limit value, a second current limit part 11c having a high current limit value, and a Zener diode 11d for reducing an initial inrush current.

A load 7 includes a fuse setter setting board 7a that requires an instant high power of about 7.5W for 500 milliseconds once every 5 seconds in a shooting mode, a shutter driving circuit 7b that requires an instant high power of about 7.5W for 300 milliseconds at the time of infrared 1-point 1-correction for infrared zero-point correction, and a laser range finder module driving unit 7c that requires a voltage of 300V and a current of about 0.025A for 100 milliseconds when driving the laser range finder module.

In an operation of the present invention, if power is supplied from a battery 1, the power control microprocessor 11a of the power supply device 11 turns on the first current limit part 11b, and keeps turned off the second current limit part I I c, a first boost converter 11e, and a second boost converter 11f.

At this moment, the current that has passed through the first current limit part 11b charges the supercapacitor 3c through the Zener diode 11d. The power control microprocessor 11a checks the charging voltage in real-time. If the supercapacitor 3c is charged up to the same voltage level as that of the battery 1, the power control microprocessor 11a turns on the first boost converter 11e and charges the supercapacitor 3c up to a final voltage, and subsequently discharges the charged voltage when the load 7 requires an instant high power.

Further, in order to minimize the leakage current, the laser range finder module driving unit 7c turns on the second boost converter 11f only when driving the laser range finder module. If the supercapacitor 3c is fully charged and other electronic boards 5 are stabilized after power is first supplied to the system, current consumed by corresponding electronic boards 5 is reduced significantly. For example, in the case of a small arms fire control system, after a main control processor, memory, a Field Programmable Gate Array (FPGA), etc. are stabilized, the current consumption of about 400 mA is reduced.

The power control microprocessor 11a that checks the power state of the system in real-time turns off the first current limit part 11b and turns on the second current limit part 11c in order to return this current to the power supply device 11. Thus, power required by respective units 7a, 7b, 7c of the system can be used in an efficient distribution within a limited power capacity of the battery 1.

FIG. 3 shows a signal of the power control microprocessor 11a and the charging time of the supercapacitor 3c depending on the state and time of the system. From FIG. 3, it can be seen that if the system enters a stabilization step after power is supplied to the system, the power control microprocessor 11a turns on the second current limit part 11c, so the charging time of the supercapacitor 3c reduces from Δt1 to Δt2.

FIG. 4 shows an inrush current and a charging state of the supercapacitor 3c, which are generated when the supercapacitor 3c is charged in the event that the existing power supply device is applied (FIG. 4a) and the present invention is applied (FIG. 4b).

As described above, the present invention relates to the design of the power supply device of the small arms fire control system that is driven using the battery and the supercapacitor and requires an instant high power. The present invention can solve problems such as an increase of the charging time and a reduction of the charging efficiency of the supercapacitor, increased shock to electronic components due to an excessive inrush current, and so on in the existing instant high power supply device.

The power supply device 11 of the present invention can reduce the charging time of the supercapacitor and solve a problem in which the battery is damaged due to excessive current discharging of a battery when charging the supercapacitor 3c by checking the power state of the system in real-time and switching current limit parts 11b, 11c with different limit current values using the power control microprocessor 11a. Further, the use efficiency of power can be maximized by properly distributing power of the system.

Furthermore, in charging the supercapacitor using a battery 1, the supercapacitor 3c is firstly charged through the Zener diode 11d. Thereafter, if the charging voltage of the supercapacitor 3c is the same voltage level as that of the battery I as a result of real-time monitoring, the power control microprocessor 11a turns on the first boost converter 11e and then charges the supercapacitor up to a final voltage. Accordingly, an inrush current can be reduced and the charging efficiency of the supercapacitor can be improved.

Hereinafter, a method of supplying an instant high power to the small arms fire control system according to the present invention is described below.

A method of supplying power to the small arms fire control system or a similar small arms system according to the present invention includes a first process of, when power is supplied from a battery, limiting a low current of current supplied to the system from the current limit part, a second process of charging the supercapacitor with the limited current, a third process of, if the supercapacitor is charged to a predetermined voltage, charging the supercapacitor up to a final voltage, which will be supplied to a load, using the Zener diode and the boost converter, and a fourth process of supplying the charged voltage to a load requiring a high power, wherein an instant high power is supplied to the load using a variable current limit and multi-step charging method.

The second process includes charging the supercapacitor in multiple stages using the Zener diode and the boost converter in order to minimize an inrush current occurring upon charging.

The method further includes a process of, if the current is charged to the supercapacitor and peripheral boards are stabilized, supplying the charged current to each board.

Further, according to the method, the microprocessor varies a limit current value by switching the current limit part according to a power state, and supplies power to a desired load timely.

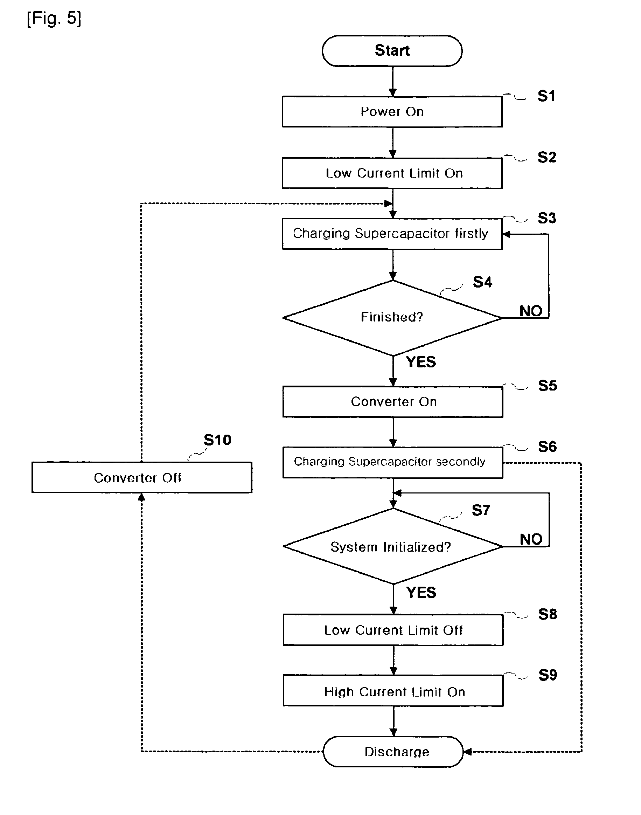

FIG. 5 shows an instant high power supply method for the small arms fire control system according to the present invention. According to this method, power is supplied from the battery to the system (S1). A low current of current supplied to the system is limited by the current limit part (S2). The supercapacitor is firstly charged with a limited current of the applied battery power (S3). The supercapacitor is charged to a predetermined voltage through the Zener diode (S4). If the supercapacitor is charged to the predetermined voltage, the boost converter is turned on (S5) and the supercapacitor is then secondly charged up to a final voltage, which will be supplied to a load, through the boost converter (S6). Whether the system has been initialized is checked (S7). The low current limit is turned off (S8) and the high current limit is then turned on (S9). The charged voltage is supplied to a load that requires a high power. Thus, an instant high power is supplied to the load using a variable current limit and multi-step charging method. The system initialization is performed only once after power is applied. Thus, after the boost converter is turned off (S 10) since the first discharge, the processes S7, S8 and S9 are not performed again in a state where the power is applied.

While the present invention has been described with reference to the particular illustrative embodiments, it is not to be restricted by the embodiments but only by the appended claims.

### Industrial Applicability

As described above, according to the present invention, in designing a power supply device of a small arms fire control system to have to realize various functions requiring an instant high power necessary for driving of the laser range finder module and the infrared shutter and energy charging of the fuse setter, and so on within a limited discharge capacity of a battery, the power control microprocessor, the variable current limit circuit, a circuit for preventing an inrush current and increasing the charging efficiency of the supercapacitor, and so on are used. Accordingly, there are advantages in that power of an overall system can be managed stably and efficiently and a use time of a battery can be increased.

## Claims

1. A power supply device (11) of a small arms fire control system wherein instant high power is supplied to a load (7) by using a variable current limit and multi-step charging method, the power supply device (11) being further **characterised by:**
a first and a second current limit part (11b,11c) each part having a different value from each other, the first current limit part (11b) having a low current limit value and the second current limit part (11c) having a high current limit value which is higher than the low current limit value of the first current limit part (11b),
a boost converter (11e) connected to the first and second current limit part (11b,11c), and
adapted to charge a supercapacitor (3c) up to the final voltage that will be supplied to the load (7) when the supercapacitor (3c) is charged to a predetermined voltage; and
a microprocessor (11a) for checking in real-time the status of the power supply system and the voltage of the supercapacitor (3c), and for controlling ON/OFF of the first and second current limit part (11b,11c) used in the system.

2. The power supply device (11) according to claim 1, further comprising a Zener diode (11d) which is connected to the first and second current limit part (11b,11c) and has the function of limiting initial inrush currents.

3. The power supply device (11) according to claims 1 and 2, wherein the first current limit part (11b) is turned on when power is supplied from the battery (1).

4. The power supply device (11) according to claims 1 and 2, wherein the first current limit part (11b) is turned off and the second current limit part (11c) is turned on when the supercapacitor (3c) is fully charged and the initial state of the small arms fire control system is completed.

5. A method of supplying power to a small arms fire control system wherein instant high power is supplied to a load (7) by using a variable current limit and multi-step charging method, the method being further **characterised by:**
a first step of, when power is supplied from a battery (1), limiting the current by turning on a first current limit part (11b) which has a lower current limit value among the first and a second current limit part,
a second step of charging a supercapacitor (3c) with the limited current;
a third step of, when the supercapacitor (3c) is charged to a predetermined voltage,
charging the supercapacitor (3c) up to the final voltage that will be supplied to the load (7) by using a boost converter (11e); and
a fourth step of discharging the charged voltage to the load (7) requiring high power.

6. The method according to claim 5, wherein the second step includes the process of minimizing inrush current which occurrs while charging by using a Zener diode (11d).

7. The method according to claims 5 and 6, wherein the third step further comprises the step of charging the supercapacitor (3c) when the supercapacitor (3c) is fully charged and the initial state of the small arms fire control system is completed, by turning on the second current limit part (11c) which has higher current limit value than that of the first current limit part (11b).

8. The method according to claims 5 and 6, wherein the microprocessor (11a) varies the limit current value by switching the current limit parts (11b,11c) according to the state of the power supply.

9. The method according to claims 5 and 6, wherein power is only supplied to the load (7) requiring power by using the microprocessor.

## Patentansprüche

1. Leistungszuführvorrichtung (11) für ein Kleinkaliberfeuer-Steuerungssystem, wobei eine unmittelbare hohe Leistung einer Last (7) zugeführt wird, indem eine variable Stromgrenze und ein mehrere Schritte beinhaltendes Ladeverfahren verwendet werden, wobei die Leistungszuführvorrichtung (11) aufweist:
ein erstes und ein zweites Strombegrenzungsteil (11b, 11c), wobei ein jedes Teil zu dem anderen einen jeweils unterschiedlichen Wert aufweist, wobei das erste Strombegrenzungsteil (11b) einen niedrigen Strombegrenzungswert und das zweite Strombegrenzungsteil (11c) einen hohen Strombegrenzungswert aufweist, der höher ist als der niedrige Strombegrenzungswert des ersten Strombegrenzungsteils (11b),
einen Boost-Wandler (11e), der mit dem ersten und dem zweiten Strombegrenzungsteil (11b, 11c) verbunden ist und geeignet ist, einen Superkondensator (3c) bis zu der endgültigen Spannung, die der Last (7) zugeführt wird, zu laden, wenn der Superkondensator (3c) bis zu einer vorbestimmten Spannung geladen wird; und
einen Mikroprozessor (11a) zum in Echtzeit erfolgenden Überprüfen des Status des Leistungszuführsystems und der Spannung des Superkondensators (3c) und zum EIN-/AUS-Steuem des ersten und des zweiten Strombegrenzungsteils (11b, 11 c), die in dem System verwendet werden.

2. Leistungszuführsystem nach Anspruch 1, ferner aufweisend eine Zener-Diode (11d), die mit dem ersten und dem zweiten Strombegrenzungsteil (11b, 11c) verbunden ist, und die Funktion aufweist, anfängliche Einschaltströme zu begrenzen.

3. Leistungszuführsystem (11) nach Anspruch 1 oder 2, wobei das erste Strombegrenzungsteil (11b) eingeschaltet wird, wenn von der Batterie (1) Leistung zugeführt wird.

4. Leistungszuführsystem (11) nach Anspruch 1 oder 2, wobei das erste Strombegrenzungsteil (11b) ausgeschaltet wird und das zweite Strombegrenzungsteil (11c) eingeschaltet wird, wenn der Superkondensator (3c) voll geladen ist und der Eingangszustand des Kleinkaliberfeuer-Steuerungssystems vollendet ist.

5. Verfahren zum Zuführen von Leistung an ein Kleinkaliberfeuer-Steuerungssystem, wobei eine unmittelbare hohe Leistung einer Last (7) zugeführt wird, indem eine variable Stromgrenze und ein mehrere Schritte beinhaltendes Ladeverfahren verwendet werden, wobei das Verfahren ferner **gekennzeichnet ist durch**:
einen ersten Schritt, bei dem, wenn Leistung von einer Batterie (1) zugeführt wird, der Strom **durch** Einschalten eines ersten Strombegrenzungsteils (11b), das von dem ersten und einem zweiten Strombegrenzungsteil einen niedrigeren Strombegrenzungswert aufweist, begrenzt wird;
einen zweiten Schritt, bei dem ein Superkondensator (3c) mit dem begrenzten Strom geladen wird;
einen dritten Schritt, bei dem, wenn der Superkondensator (3c) auf eine vorbestimmte Spannung geladen wird, der Superkondensator (3c) bis zu der endgültigen Spannung, die der Last (7) zugeführt wird, **durch** Verwendung eines Boost-Verstärkers (11e) geladen wird; und
einen vierten Schritt, bei dem die geladene Spannung an die eine hohe Leistung benötigende Last (7) entladen wird.

6. Verfahren nach Anspruch 5, wobei der zweite Schritt den Vorgang des Minimierens eines Einschaltstroms, der während des Ladens auftritt, durch Verwenden einer Zener-Diode (11d) beinhaltet.

7. Verfahren nach Anspruch 5 und 6, wobei der dritte Schritt ferner den Schritt des Ladens des Superkondensators (3c) aufweist, wenn der Superkondensator (3c) vollständig geladen ist und der Eingangszustand des Kleinkaliberfeuer-Steuerungssystems vollendet ist, indem das zweite Strombegrenzungsteil (11c), das einen höheren Strombegrenzungswert aufweist als das erste Strombegrenzungsteil (11b), eingeschaltet wird.

8. Verfahren nach Anspruch 5 und 6, wobei der Mikroprozessor (11 a) den Strombegrenzungswert durch Schalten der Strombegrenzungsteile (11b, 11c) gemäß dem Zustand der Leistungszuführung variiert.

9. Verfahren nach Anspruch 5 und 6, wobei die Leistung nur der Leistung benötigenden Last (7) durch Verwendung des Mikroprozessors zugeführt wird.

## Revendications

1. Dispositif d'alimentation en énergie (11) d'un système de commande de tir d'armes à feu de petit calibre, dans lequel une énergie élevée instantanée est fournie à une charge (7) au moyen d'une limite de courant variable et d'un procédé de charge en plusieurs étapes, le dispositif d'alimentation en énergie (11) étant **caractérisé, en outre, par**
une première et une seconde partie de limitation de courant (11b, 11c), chacune ayant une valeur différente, la première partie de limitation de courant (11b) ayant une valeur limite de courant faible et la seconde partie de limitation de courant (11c) ayant une valeur limite de courant élevée, supérieure à la valeur limite de courant faible de la première partie de limitation de courant (11b),
un convertisseur élévateur (11e) relié à la première et à la seconde partie de limitation de courant (11b, 11c), et conçu pour charger un super-condensateur (3c) à la tension finale qui sera alimentée à la charge (7) lorsque le super-condensateur (3c) sera chargé à une tension prédéterminée ; et
un microprocesseur (11a) pour vérifier en temps réel l'état du système d'alimentation en énergie et la tension du super-condensateur (3c) et pour la commande ON/OFF de la première et de la seconde partie de limitation de courant (11b, 11c) utilisées dans le système.

2. Dispositif d'alimentation en énergie (11) selon la revendication 1, comprenant, en outre, une diode Zener (11d) reliée à la première et à la seconde partie de limitation de courant (11b, 11c) et ayant pour fonction de limiter des courants d'appel initiaux.

3. Dispositif d'alimentation en énergie (11) selon les revendications 1 et 2, dans lequel la première partie de limitation de courant (11b) est mise en circuit lorsque l'énergie est fournie à partir de la batterie (1).

4. Dispositif d'alimentation en énergie (11) selon les revendications 1 et 2, dans lequel la première partie de limitation de courant (11b) est mise hors circuit et la seconde partie de limitation de courant (11c) est mise en circuit lorsque le super-condensateur (3c) est entièrement chargé et que l'état initial du système de commande de tir d'armes de petit calibre est exécuté.

5. Procédé d'alimentation en énergie d'un système de commande de tir d'armes à feu de petit calibre, dans lequel une énergie élevée instantanée est fournie à une charge (7) au moyen d'une limite de courant variable et d'un procédé de charge en plusieurs étapes, le procédé étant, en outre, **caractérisé par** les étapes suivantes
une première étape consistant, lorsque l'énergie est fournie à partir d'une batterie (1), à limiter le courant en mettant en circuit une première partie de limitation de courant (11b) qui présente une valeur limite de courant inférieure parmi la première et une seconde partie de limitation de courant,
une deuxième étape consistant à charger un super-condensateur (3c) avec le courant limité ;
une troisième étape consistant, lorsque le super-condensateur (3c) est chargé à une tension prédéterminée, à charger le super-condensateur (3c) jusqu'à la tension finale qui sera fournie à la charge (7) au moyen d'un convertisseur élévateur (11e), et
une quatrième étape consistant à décharger la tension chargée vers la charge (7) qui demande une énergie élevée.

6. Procédé selon la revendication 5, dans lequel la deuxième étape inclut le procédé consistant à minimiser le courant d'appel généré lors de la charge en utilisant une diode Zener (11d).

7. Procédé selon les revendications 5 et 6, dans lequel la troisième étape comprend, en outre, l'étape consistant à charger le super-condensateur (3c), lorsque le super-condensateur (3c) est entièrement chargé et que l'état initial du système de commande de tir d'armes à feu de petit calibre est exécuté, en mettant en circuit la seconde partie de limitation de courant (11c) qui présente une valeur limite de courant supérieure à celle de la première partie de limitation de courant (11b).

8. Procédé selon les revendications 5 et 6, dans lequel le microprocesseur (11a) fait varier la valeur limite de courant en commutant les parties de limitation de courant (1b, 11c) selon l'état de l'alimentation en énergie.

9. Procédé selon les revendications 5 et 6, dans lequel l'énergie n'est fournie qu'à la charge (7) qui demande de l'énergie au moyen du microprocesseur.
